**Europäisches Patentamt**

**European Patent Office**

**Office européen des brevets**

(19)

(11) Publication number : **0 497 419 B1**

# EUROPEAN PATENT SPECIFICATION

(12)

(45) Date of publication of patent specification :
**15.06.94 Bulletin 94/24**

(51) Int. Cl.⁵ : **C02F 3/12, C02F 1/52**

(21) Application number : **92200217.5**

(22) Date of filing : **27.01.92**

(54) Improved process for water purification.

(30) Priority : **31.01.91 IT 23891**

(43) Date of publication of application :
**05.08.92 Bulletin 92/32**

(45) Publication of the grant of the patent :
**15.06.94 Bulletin 94/24**

(84) Designated Contracting States :
**CH DE GB LI SE**

(56) References cited :
**DE-A- 3 838 864**
**PATENT ABSTRACTS OF JAPAN vol. 7, no. 171 (C-178)(1316) 28 July 1983 Richard Delmer, Weitergehende Abwasserreinigung 1977, Deutscher Fachschriften-Verlag, Mainz-Wiesbaden, DE**
**KORRESPONDENZ ABWASSER. vol. 36, no. 8, August 1989, AUGUSTIN DE pages 882 - 888; J. MASCHLANKA : 'PHOSPHAT - ELIMINATION'**

(56) References cited :
**TENSIDE. vol. 13, no. 2, April 1976, MUNCHEN DE page 110; G. JAEKEL :'WEITERGEHENDE REINIGUNG VON ABWÄSSERN AUF BIOLOGISCHEM WEGE UNTER-BERÜCKSICHTIGUNG DER PHOSPHOR- UND STICKSTOFFELIMINATION'**
**KORRESPONDENZ ABWASSER. vol. 36, no. 10, October 1989, AUGUSTIN DE pages 1140 -1149; V. SCHÄFER : 'REDUKTION DES PHOSPHATGEHALTES KOMMUNALER ABWÄSSER MIT HILFEEINER METAL-LIONEN-BIOPHOS-KOMBINATION'**

(73) Proprietor : **CAFFARO S.p.A. Società per l'Industria Chimica ed Elettrochimica**
**Via Privata Vasto 1**
**I-20121 Milan (IT)**

(72) Inventor : **D'Elia Mauro**
**via Fermi, 6/b**
**20097 San Donato Milanese (Milano) (IT)**
Inventor : **Isolati, Antonio**
**Via Plava, 2**
**47100 Forli' (IT)**

(74) Representative : **Dragotti, Gianfranco et al**
**SAIC BREVETTI s.r.l.**
**Viale Bianca Maria, 15**
**I-20122 Milano (IT)**

EP 0 497 419 B1

## Description

The present invention relates to the water purification and more specifically to an improved process for the simultaneous removal of nutrient substances in active sludge purification plants through simultaneous steps of denitrification-nitrification and hydrolysis and coprecipitation of phosphorus.

As it is known the traditional active sludge plants for the purification of sewage waters, especially town and civil sewage waters, substantially contemplates an aeration or oxidation phase in which the action of aerobic micro-organisms takes place, and a decantation phase (secundary) namely the separation of the sludges (which are the so-called active sludges) from the water effluent from the previous phase. The thus purified water is discharged (for example in a water river or pool), whereas the active sludges are mostly transferred to the drying and disposal sections; a minor part thereof is recycled to the aeration or oxidation phase to support the process occurring in the corresponding oxidation basin.

The latter may be preceeded by a preliminary phase of grid filtering for the removal of coarse materials, and by a primary decantation useful to remove from the sewage the solid sedimentable contents.

The water coming out from the secundary decanter may undergo further treatments aiming to the removal of polluting substances not previously removed and particularly of the phosphorus (co-responsible of the so-called eutrophication of seas and lakes).

The simultanoeus removal of nutrients in a standard active sludge plant has always been the aim of all people attending to the operation of these plants, but the interaction of the particular mechanisms and of the kinetics, both chemico-physical and biological, has always lead to only partial solutions, often giving place to undesired side effects such as "bulking" or "foaming".

For example the nitrate forming and their presence in the anoxic area inhibits the release of phosphorus from the bacteria, whereas the constantly aerobic or even anoxic conditions of the system cannot anyway prevent the forming of filament like materials which in turn give place to the "bulking".

This problem tend to be worsened both owing the more and more reduced limits admitted for the phosphorus content (up to 0.5 ppm P), and owing to the demonstrated tendency towards an unbalance of the ratio BOD/TKN in the characteristics of the civil sewage waters fed to the treatment plants.

However, to date the main preoccupation was and still is that of the phosphate removal, for which the mostly adopted solution consists in the addition to the water of chemical conditioning compounds, whereas lower attention has been paid to nitrogen.

A number of systems has been proposed for the P and N simultaneous removal, but all of them are based on often remarkable modifications of the plants by adding to the existing processing cycle aerobic or anaerobic sections (A/O, PHOSTRIP, PHOREDO X, etc.).

The addition of chemical conditioning agents has generally the purpose of agglomerating the material particles present in the sewage waters as a colloidal dispersion and that of removing the orthophosphates through the forming of insoluble salts which can be separated from the liquid phase through the mechanisms of coagulation-flocculation-sedimentation.

The chemical reaction by which the insoluble compound of orthophosphate is formed takes place preliminarily with respect to the chemical-physical coagulation-flocculation process.

The compounds which are commonly used for this purpose are the inorganic salts of iron (bivalent and trivalent) and of aluminium (sulfate, chloride, polychloride and alluminate).

The iron salts, upon being added to the system, lead very readily to the forming of well developed flocks with a favourable sludge index and thus liable to a quick sedimentation.

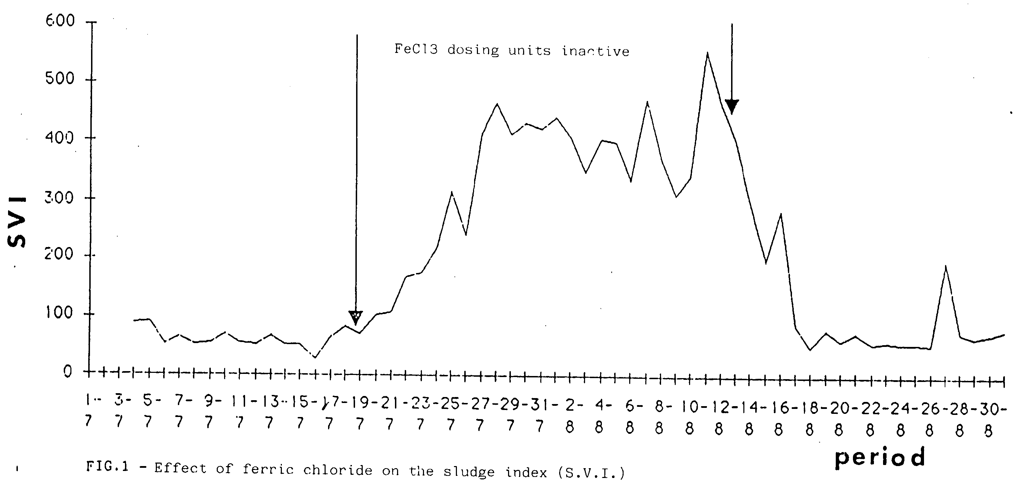

The effect of sludge "weighing down" due to the presence of the iron ion can be readily revealed from a typical pattern of the sludge index (SVI) such as for example illustrated in fig. 1, which shows the SVI data both in the case $FeCl_3$ is added (beginning and end) and in the absence of the ferric salt (center period). As it is seen whilst in the presence of the iron ion SVI is stably maintained at around 100 values; in the absence of the conditioning agent the SVI value increases rapidly to values of the order of 300, with peaks of more than 500.

This feature is very important since, being it available a "heavy" sludge, the phenomena of dragging and going back up are controllable in a much easier manner even under critical conditions of hydraulic load.

As a negative side effect the greater volume of sludges can be mentioned, thus involving higher costs for their treatment and disposal.

Lastly the compounds which the iron salt can form with orthophosphates have exceedingly low solubility, whereby are definitely separated from the liquid phase.

$$K_{sFePO4} = 0.8. \ 10^{-22} \text{ at } 20°C.$$

The capacity of charge neutralization of the iron salts on the contrary seems not to be particularly relevant, whereby these salts are poorly efficient as regards the removal of highly charged colloids and thus show contrary behaviour with respect to the aluminium salts.

The latter (sulfate, chloride, polychloride and aluminate) originate lighter and less developed flocks in comparison with iron salts and consequently have less incidence on the sludge index.

The flocks are formed more slowly with respect to the iron salts since the iron hydroxide is formed already at pH 3.2 whereas that of aluminium appears for pH values higher than 4.5 (with the acid salts of AL), the maximum activity occurring at pH of between 5.5 and 6.5

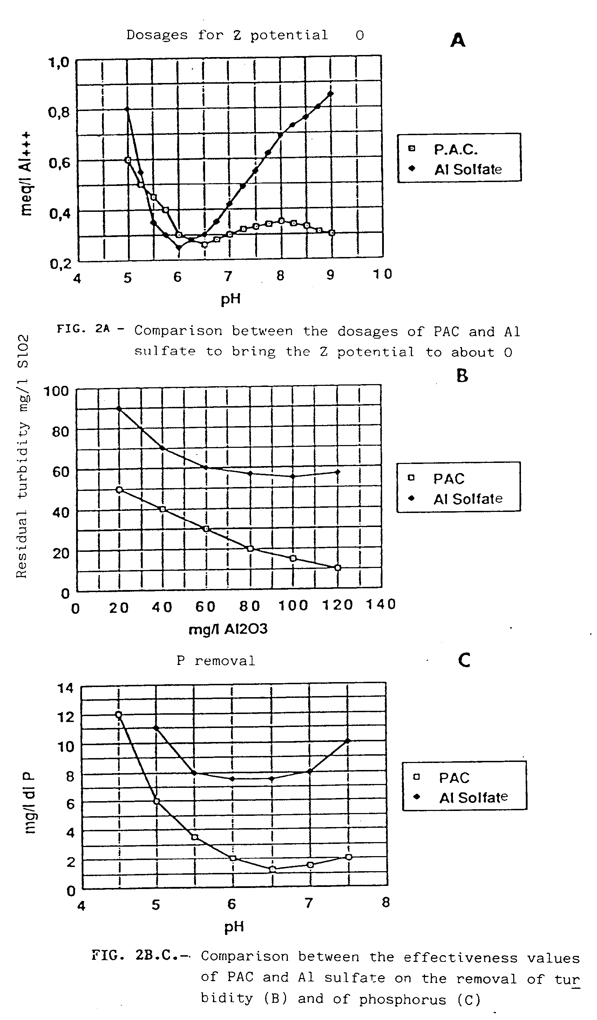

The advantage of these compounds is represented by a higher efficiency in the neutralization of the surface charges (Z potential tending to zero) as indicated in fig.2A and consequently a higher efficiency is detected as regards the removal of the turbidity and of the orthophosphates (Figs.2B and 2C).

Among the aluminium salts the polychloride (PAC) seems to be the most effective one since also at pH 7-8 polynuclear compounds are formed with high positive charge.

Although the respective properties of the iron and aluminium salts were thus known, it has been now found and is the object of the present invention that, if within the conventional cycle of biological purification with active sludges there is injected, at well defined phases of the whole process, at least a compound of trivalent iron together with a possibly polymeric aluminium compound, a strongly synergistic effect is obtained with respect to the phosphorus removal and to the simultaneous process of biological oxidation of the ammoniacal nitrogen to nitrates (nitrification) under aerobic conditions as well as to the subsequent biological reduction of the nitrates to elemental nitrogen (denitrification) under anoxic conditions.

The process of the present invention is thus characterized in that a compound of trivalent iron, preferably ferric chloride, is added to the sewage to be treated upstream of the aeration and oxidation phase and the sludges being recycled to the biological oxidation phase are added with an aluminium compound, preferably aluminium polychloride. The selection of the treatment points is critical in view of the specific nature of each plant.

As it will be confirmed by the experimental data reported hereinafter by the process of the present invention it is possible to take advantage of the peculiar characterics of the two compounds by particular mechanisms which can be resumed as follows:

1. Reduction of the substrate fed to the biological section with the attendant complete nitrification under oxic conditions.

2. Improvement of the recycle sludge index (SVI) caused by the iron salts to eliminate possible bulking phenomena and artificial "ageeing" of the sludge to promote the nitrification processes, as well as increase in the anoxic area of the "release" of phosphorus from the bacteria even in the presence of the inhibiting action of the nitrates.

It is moreover supposed that for the sludges having very low SVI present on the bottom of the decanter of the biological process the bioreduction of the nitrates to nitrogen is accelerated.

3. Hydrolysis and co-precipitation of the phosphorus by means of the polynuclear aluminium compounds.

4. Partial and thus optimum neutralization of the alkalinity resulting from the denitrification phase through hydrolysis, acidic on the average, of the aluminium polychloride.

On the contrary the nitrification phase, causing the alkalinity consumption, tends to displace the system to lower pH values: according to the invention the global acidity originating from the $FeCl_3$ hydrolysis and from the PAC is lower with respect to the use of only iron salt or of aluminium sulfate, whereby an environnment more favourable for the same nitrification is generated.

5. Preconditioning of the excess sludges for the next thickening and dehydration.

6. Full removal of the anionic surface active substances and of the fatty substances (E.E.) as caused by PAC.

The process of the present invention has been experimentally tested and to this end an experiment has been carried out for a period of about 5 months (including the whole summer period) in a purification plant in which in the past years only ferric chloride was used as a chemical conditioning additive.

During the experiments there were simultaneously dosed, through separate feeding lines and at different points of the active sludge process, both ferric chloride and aluminium polychloride (PAC) according to the method of the "simultaneous precipitation".

This technique was selected for the following main reasons:

- to evaluate the possibility of using the system also in plants differently assembled and thus independently from the presence of a primary sedimentation;
- to evaluate possible synergisms on the nitrification process;
- to achieve the maximum flexibility of plant operation upon varying the hydraulic and polluting loads, as well as the season and environnment conditions.

After a number of attempts it was found that the best results, for the specific plant, were obtained with the following dosages and dosing points:

$FeCl_3$ : 50 ppm at the inlet of the oxidation basin,
PAC : 30 ppm at the sludge recycling

The results obtained by the present esperiments ( 1990) have been compared with those obtained in the same period of the immediately previous year (1989) when 120 ppm of $FeCl_3$ were dosed at the inlet of the oxidation basin.

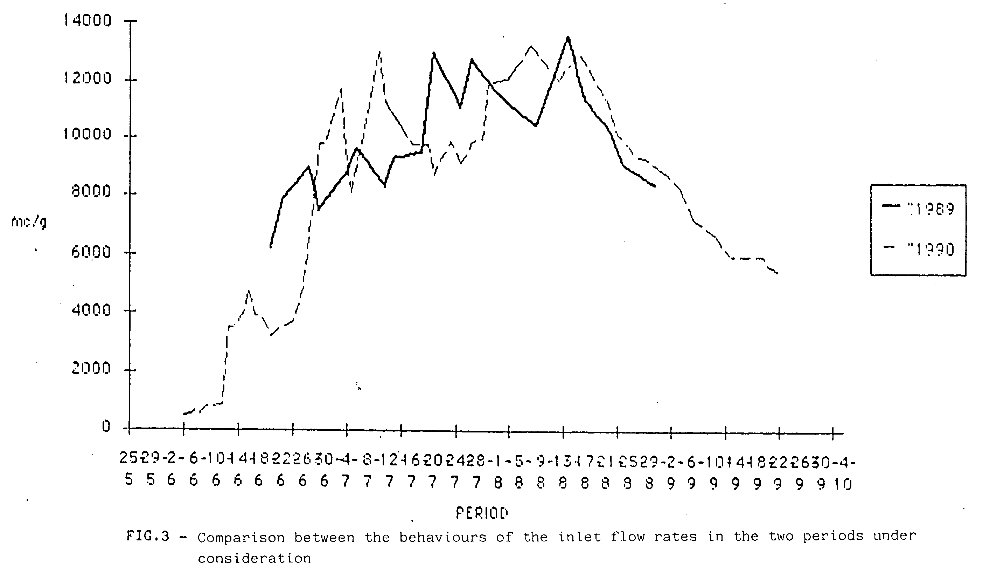

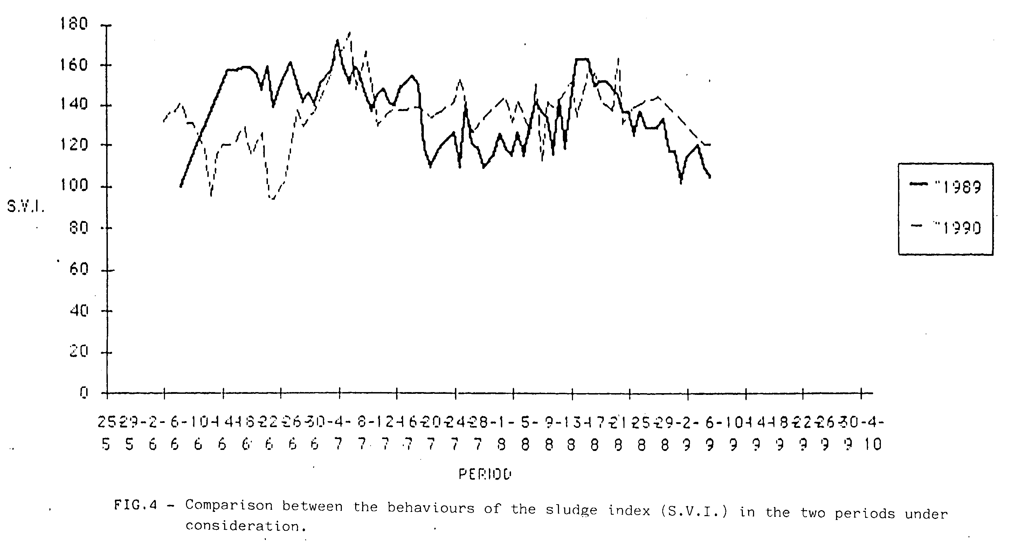

In fig.3 the comparison is reported between the flow rates at the inlet of the plant and in fig.4 the behaviour of the sludge index in the two years under consideration.

As regards both the flow rates and the SVI values no appreciable differences between the two periods under considerations are noticed; more particularly as regards the sludge index the prevailing effect of the Fe salts is confirmed.

As a matter of fact the properties of the sludge are not substantially modified by the PAC+FeCl$_3$ system.

In order to evaluate the greater effectiveness of the two ions in comparison with ferric chloride alone, three parameters relevant for the evaluation of the purification treatment have been taken into consideration:

- COD removal
- Phosphorus (ortho) removal
- Nitrogen removal

The latter has been evaluated by balancing the nitrogen millimoles at the inlet as ammonia and the nitrogen millimoles at the outlet as ammonia and nitrates.

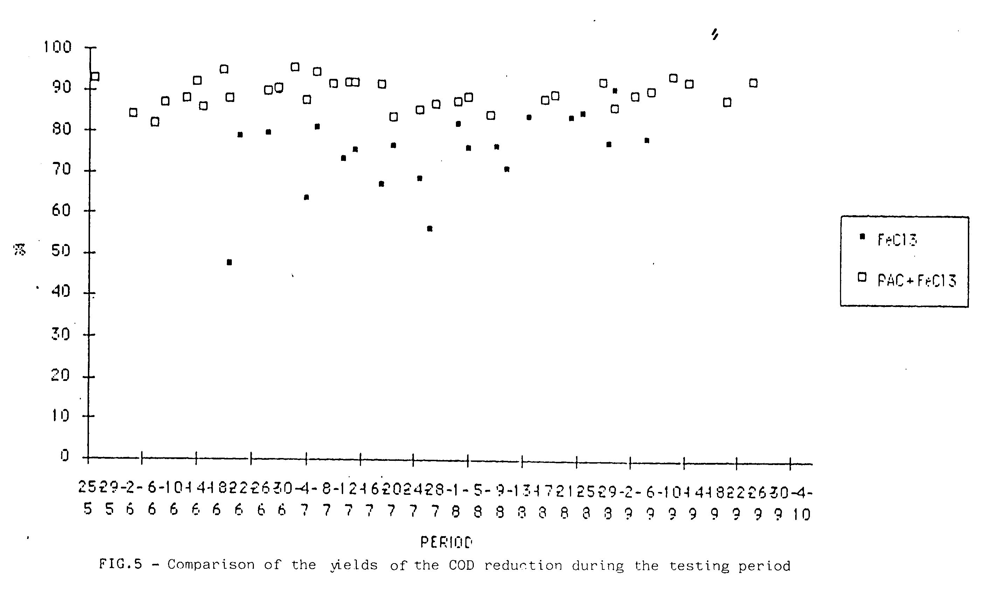

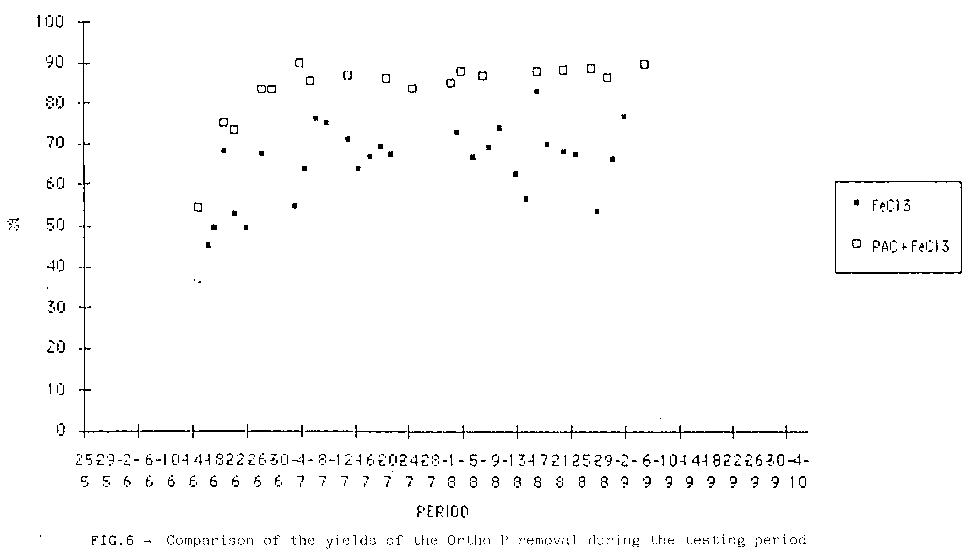

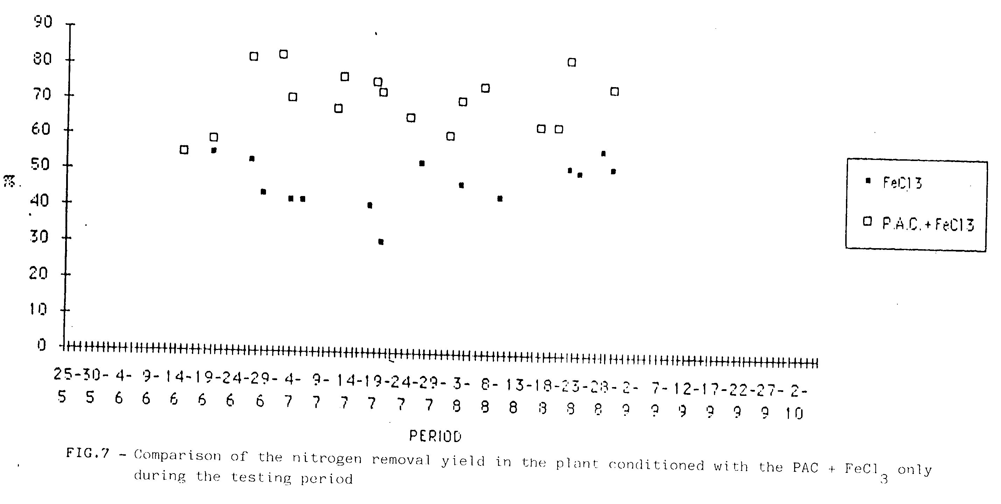

The comparison of the results obtained with the two systems is reported at the figs.5,6,7 as regards the yields of the removal of COD, P (ortho) and of nitrogen during the periods being compared.

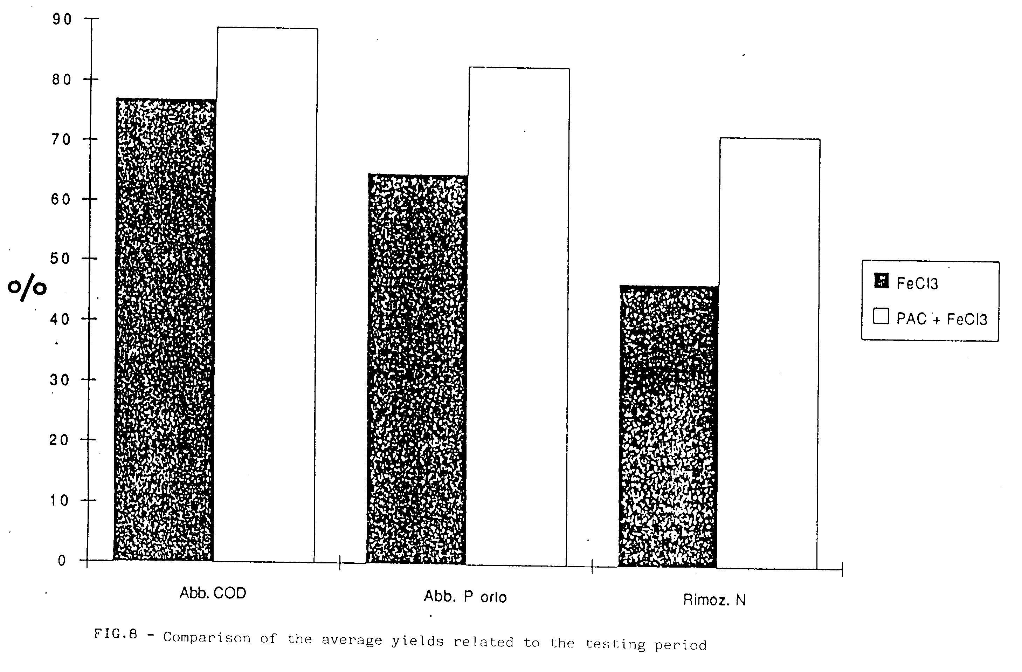

In fig. 8 is instead reported the average yield on the whole period for the three parameters under consideration.

As it can be noticed the yields obtained with the PAC + FeCl$_3$ system are always remarkably higher throughout the comparison period and for all the three parameters with respect to the yields obtained with FeCl$_3$ only.

Moreover the patterns are more constant in comparison with the use of FeCl$_3$ only (characterized by strong oscillations along the period) confirming the greater capacity of the PAC + FeCl$_3$ system of facing the unavoidable variations of the flow rates and of the polluting load at the inlet.This feature is to be pointed out since a great problem for the operation of the plant is that of following the unavoidable changes of flow rates and load.

Lastly, as regards the three parameters taken into consideration, the PAC + FeCl$_3$ system seems to be mostly effective on the nitrogen removal.

In order to get further confirmation of the improvement obtainable with the PAC + FeCl$_3$ system, a comparison has been made between the results of the present experiments and those obtained during three years of experiments in twelve plants in which, by groups of four plants, the effectiveness of total P reduction has been evaluated with:

- aluminium sulfate
- ferric chloride
- PAC

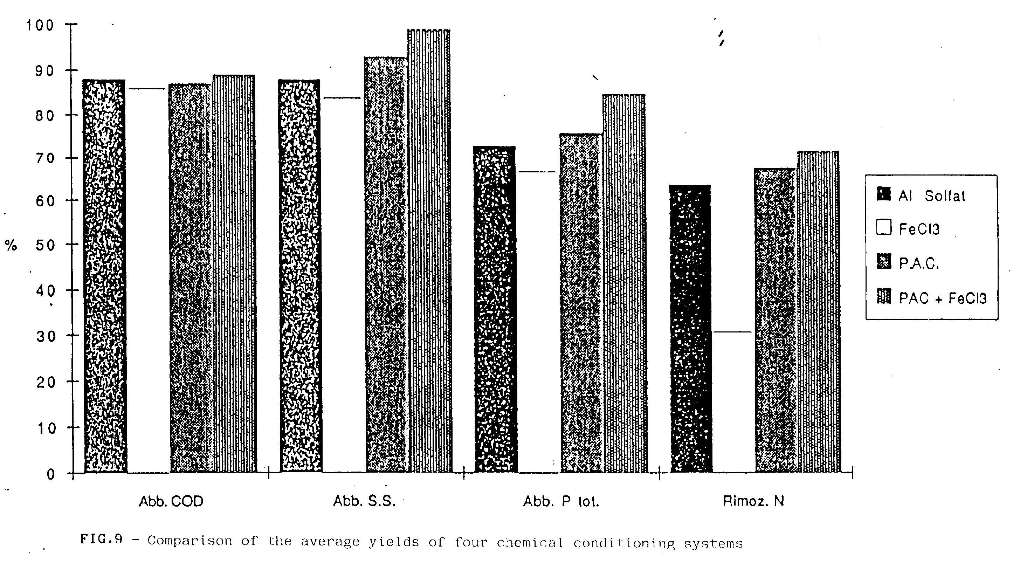

Since, besides the measurements relating to total P, several other parameters were analized, the comparison reported in fig.9 has been made possible.

From the examination of the results relating to the average values of removal during the period taken into consideration it is evident that no substantial difference exists between the four systems of chemical conditioning taken into consideration as regards the COD reduction.

More marked differences are instead noticed from the comparisons relating to the reduction of the suspended solids, of the total P and of the nitrogen removal.

More particularly it is noted that the PAC + FeCl$_3$ is the most effective on absolute basis whereas the worst results are obtained when ferric chloride alone is used.

The results relating to aluminium sulfate and to PAC are in an intermediate position with respect to the two previous systems, better data being obtained with PAC in comparison with aluminium sulfate.

The above considerations must be anyhow evaluated taking it into consideration that the comparisons have been made between results obtained in different periods and above all in different plants.

Although the interpretation of results obtained under non homogeneous conditions must be carried out with great caution, from the comparison of the data a clear and fully unexpected greater effectiveness of th PAC + FeCl$_3$ system is seen.

For all the parameters the combined use of Fe and Al salts has constantly given better results with respect to the use of only one compound and this fact is particularly worth of being noted with respect to the reduction and removal of nutrient substances.

Owing to the complexity of the mechanisms and processes involved a definite interpretation of the observed phenomena can be difficultly achieved.It is however possible to make some suppositions.

The main characteristic of the Fe salts seems to be that of acting on the physical properties of the sludge, particularly on the settling behaviour, thanks to the ready forming of bulky and heavy flocks.

The main characteristic of the Al salts seems to be that of the greater effectiveness in the chemical and chemico-physical processes, whereby the better results in the reduction of the phosphorus might be explained.

As regards the nitrogen removal it is known that it takes place through the biological oxidation of the ammoniacal nitrogen to nitrates (nitrification) under aerobic conditions and the subsequent biological reduction of the nitrates to elemental nitrogen (denitrification) under anoxic conditions.

Of these two phases the nitrification seems to be the most delicate one.

The growth and maintenance of colonies of nitri-

fying bacteria (NITROSOMONAS and NITROBACT-ER) are difficult, being influenced by limiting factors such as dissolved oxygen, pH and temperature.

Furthermore it seems confirmed that the growth of nitrifying bacterial populations takes mainly place on the finest particles of sludge.

Under this point of view it is clear that a chemical conditioning agent improving the effectiveness of removal of suspended solids (such as the Al salts) leads to the enrichment of the sludge with nitrifying bacteria, which means to artificially increase, together with the effect of the ferric chloride on the SVI, what is called the "sludge age", thus improving the nitrification process.

To this fact the increased exchanges with the atmosphere are to be added, owing to the reduction of foams as caused by the removal of anionic surface active agents. All the above mechanisms, in the case of the PAC + $FeCl_3$ system, take thus place in the presence of a sludge having an optimum SVI index, by which the release and the going back upwardly of the finest and lightest flocks is prevented or limited. The global result is a stabilized process with higher depurating effectiveness.

The results obtained by simultaneously and separately using aluminium polychloride (PAC) and ferric chloride have shown that purification yields are achieved which are are higher not only in comparison with those obtainable by using a single chemical conditioning agent, but also in comparison with the sum of the results of the single additives.

The reduction of the dosage of $FeCl_3$ from 120 ppm (single conditioning agent) to 50 ppm (in combination with PAC), while maintaining the positive effects on the properties of the sludge, causes negative features, such as corrosivity, colouring and pH reduction, to be limited or eliminated.

Experiments have also been carried out with a formulation comprising derivatives of aluminium and bivalent iron, but the results obtained are definitely inferior. Moreover compounds of this type must be added exclusively to the oxidation basin thus requiring greater oxygen amounts for the conversion of ferrous ion to the ferric one.

It is lastly to be noticed that the invention must not be construed as being limited to the preferred compounds, namely aluminium polychloride and ferric chloride, since the activities as found and the synergistic interaction mainly depend on the presence of trivalent Fe ion and Al ion.

## Claims

1. A process for the purification of sewage waters, wherein the sewage, after a possible primary sedimentation, is serially passed to an oxidation phase in the presence of aerobic micro-organisms and to a separation phase of the treated water from the sludge resulting from the oxidation phase, the sludge being partially recycled to the said oxidation phase, characterized in that a compound of trivalent iron is added to the sewage to be treated upstream of the said oxidation phase and a possibly polymeric aluminium compound is added to the part of the active sludge being recycled to the said oxidation phase.

2. A process according to claim 1, characterized in that said compound of trivalent iron is an inorganic iron salt.

3. A process according to claim 2, characterized in that said inorganic iron salt is ferric chloride.

4. A process according to claim 1, characterized in that said polymeric aluminium compound is aluminium polychloride.

5. A process according to claim 1, characterized in that said polymeric aluminium compound is added to said part of active sludge recycled to said oxidation phase enough upstream of the introduction of the active sludge in said oxidation phase so that the effect of said polymeric aluminium compound may be exploited.

6. A process according to claim 1, characterized in that said compound of trivalent iron is added in an amount of at least 5 mg/l meant as trivalent iron ions.

7. A process according to claim 1, characterized in that said polymeric aluminium compound is added in an amount of at least 3 mg/l meant as $Al_2O_3$.

## Revendications

1. Un procédé pour la purification d'eaux-vannes, dans lequel l'eau d'égout, éventuellement après une première sédimentation, est soumise, successivement, à une phase d'oxydation, en présence de micro-aérobies, et à une phase de séparation de l'eau traitée, des boues résultant de la phase d'oxydation, les boues étant partiellement recyclées vers la phase d'oxydation, caractérisé en ce qu'un composé de fer trivalent est ajouté à l'eau d'égout, à traiter en amont de ladite phase d'oxydation et en ce qu'éventuellement un composé d'aluminium polymérisé est ajouté à la fraction des boues actives recyclées vers la phase d'oxydation.

2. Un procédé selon la revendication 1, caractérisé en ce que ledit composé de fer trivalent est un sel minéral de fer.

3. Un procédé selon la revendication 2, caractérisé en ce que ledit sel minéral de fer est le chlorure ferrique.

4. Un procédé selon la revendication 1, caractérisé en ce que ledit composé d'aluminium polymérisé est du polychlorure d'aluminium.

5. Un procédé selon la revendication 1, caractérisé en ce que ledit composé d'aluminium polymérisé est ajouté à ladite fraction des boues actives recyclées vers ladite phase d'oxydation, suffisamment en amont de l'introduction desdites boues actives dans ladite phase d'oxydation, de façon à ce que l'effet dudit composé d'aluminium polymérisé puisse être utilisé.

6. Un procédé selon la revendication 1, caractérisé en ce que ledit composé de fer trivalent est ajouté à une quantité d'au moins 5 mg/l d'ions de fer trivalent.

7. Un procédé selon la revendication 1, caractérisé en ce que ledit composé d'aluminium polymérisé est ajouté à une dose d'au moins 3 mg/l de $Al_2O_3$.

**Patentansprüche**

1. Verfahren zur Reinigung von Abwässern, bei dem das Abwasser nach einer möglichen Primärsedimentation nacheinander in eine Oxidationsphase in Gegenwart von aeroben Mikroorganismen und in eine Phase zur Trennung des behandelten Wassers vom aus der Oxidationsphase resultierenden Schlamm geleitet wird, wobei der Schlamm teilweise in die benannte Oxidationsphase rückgeführt wird, dadurch **gekennzeichnet**, dass eine dreiwertige Eisenverbindung zu dem zu behandelnden Abwasser stromaufwärts der Oxidationsphase zugesetzt wird und eine gegebenenfalls polymere Aluminiumverbindung zu dem Teil des aktiven Schlamms zugesetzt wird, der in die Oxidationsphase rückgeführt wird.

2. Verfahren gemäss Anspruch 1, dadurch **gekennzeichnet**, dass die dreiwertige Eisenverbindung ein anorganisches Eisensalz ist.

3. Verfahren gemäss Anspruch 2, dadurch **gekennzeichnet**, dass das anorganische Eisensalz Eisenchlorid ist.

4. Verfahren gemäss Anspruch 1, dadurch **gekennzeichnet**, dass die polymere Aluminiumverbindung Aluminiumpolychlorid ist.

5. Verfahren gemäss Anspruch 1, dadurch **gekennzeichnet**, dass die polymere Aluminiumverbindung zu dem in die Oxidationsphase rückgeführten Teil des aktiven Schlamms hinreichend weit stromaufwärts vor der Einleitung des aktiven Schlamms in die Oxidationsphase zugegeben wird, so dass der Effekt dieser polymeren Aluminiumverbindung ausgenutzt werden kann.

6. Verfahren gemäss Anspruch 1, dadurch **gekennzeichnet**, dass die dreiwertige Eisenverbindung in einer Menge von mindestens 5 mg/l, angegeben als dreiwertige Eisenionen, zugesetzt wird.

7. Verfahren gemäss Anspruch 1, dadurch **gekennzeichnet**, dass die polymere Aluminiumverbindung in einer Menge von mindestens 3 mg/l, angegeben als $Al_2O_3$, zugesetzt wird.

FIG.1 - Effect of ferric chloride on the sludge index (S.V.I.)

Dosages for Z potential   0   **A**

FIG. 2A - Comparison between the dosages of PAC and Al sulfate to bring the Z potential to about 0

**B**

P removal   **C**

FIG. 2B.C.— Comparison between the effectiveness values of PAC and Al sulfate on the removal of tur bidity (B) and of phosphorus (C)

FIG.3 – Comparison between the behaviours of the inlet flow rates in the two periods under consideration

EP 0 497 419 B1

FIG.4 - Comparison between the behaviours of the sludge index (S.V.I.) in the two periods under consideration.

FIG.5 - Comparison of the yields of the COD reduction during the testing period

FIG.6 — Comparison of the yields of the Ortho P removal during the testing period

FIG.7 – Comparison of the nitrogen removal yield in the plant conditioned with the PAC + FeCl₃ only during the testing period

FIG.8 – Comparison of the average yields related to the testing period

FIG.9 - Comparison of the average yields of four chemical conditioning systems